# EUROPEAN PATENT APPLICATION

(11) **EP 4 521 087 A1**
(43) Date of publication of application: **12.03.2025**
(21) Application number: 23195375.3
(22) Date of filing: 05.09.2023
(51) Int. Cl.: G01M 3/02, G01M 3/04, F01P 11/02, F01P 11/18

(54) **A FLUID MANAGEMENT SYSTEM**

(71) Applicant: VALEO SYSTEMES THERMIQUES, 78320 Le Mesnil Saint-Denis (FR)
(72) Inventor: POTOK, Dariusz, 32 050 Skawina (PL); LIPOWSKI, Mateusz, 32 050 Skawina (PL); NOWAKOWSKI, Adrian, 32 050 Skawina (PL); GUT, Damian, 32 050 Skawina (PL)
(74) Representative: Valeo Systèmes Thermiques

(57) **Abstract**

The present invention discloses a fluid management system (100) includes a tank (110) adapted to store pressurized fluid and a support (120) adapted to support the tank (110) thereon, wherein the tank (110) includes a spigot (110c) and the support (120) includes corresponding opening (120a) adapted to configure connection and fluid communication between an interior volume (110b) of the tank (110) and a conduit external to the tank (100). In addition a leakage indicator in form of a reservoir (120b) disposed outside the tank (110) and in fluid communication with the opening (120a) through at least one channel (120c) emanating from the opening (120a).

## Description

### FIELD OF INVENTION

The present invention relates to a fluid management system. More particularly, the present invention relates to an arrangement for leakage indication for the fluid management system for a motor vehicle.

### BACKGROUND OF THE INVENTION

The present invention relates to the field of fluid management. It is important to maintain an optimum temperature for components in a motor vehicle such as battery packs for efficient operation of the battery.

In the related art, the fluid management system includes a fluid circulation circuit and a coolant hub assembly for the thermal management purpose of above-mentioned components. Heat transfer medium such as water or antifreeze liquid circulate through the circulation pipelines. However, the coolant hub assembly for thermal management for a motor vehicle is a complex assembly comprising a plurality of sealing couplings/connections for configuring fluid communication between different components. In case of any leakage of fluid, it is difficult to determine the degree and identify the origin of the leakage. In addition, the overflow/leakage of the coolant fluid, for example, coolant may damage the sensitive electronic heat generating components, such as for example battery, if not timely addressed.

Therefore there is need for an arrangement which can indicate the degree and origin of the leakage of the coolant fluid. Further, there is a need for an arrangement for timely addressing the overflow/leakage of the coolant fluid before the insufficient supply of coolant to the sensitive electronic heat generating components causes damage to the heat generating components such as batteries.

### SUMMARY OF THE INVENTION

A fluid management system is disclosed in accordance with an embodiment of the invention. The fluid management system includes a tank and a support. The tank is adapted to store pressurized fluid and the support is adapted to support the tank thereon. The tank includes a spigot and the support includes corresponding opening adapted to configure connection and fluid communication between an interior volume of the tank and a conduit external to the tank. In addition a leakage indicator in form of a reservoir disposed outside the tank and in fluid communication with the opening through at least one channel emanating from the opening.

Particularly, the tank is a degassing tank.

The reservoir is either formed on the tank or the support.

In accordance with an embodiment of the present invention, the channel is configured on the support.

In accordance with an embodiment of the present invention, the channel follows substantially a straight profile.

In accordance with an embodiment of the present invention, the channel is either depletion or incision.

In accordance with an embodiment of the present invention, the channel sloped from the opening side towards the reservoir side thereof.

In accordance with an embodiment of the present invention, the reservoir can be made integral with the support.

In accordance with an embodiment of the present invention, the reservoir can be detachably coupled to the support.

In accordance with an embodiment of the present invention, the support is substantially concave with concavity towards the tank.

In accordance with an embodiment of the present invention, the bottom of the tank is essentially convex with a convexity complementary to the concavity of the support.

In accordance with an embodiment of the present invention, bottom of the tank abutting the support at least partially covers the channel.

In accordance with an embodiment of the present invention, the support is adapted to be support at least one fluidic function component, more particularly at least one pump and/ or at least one valve mounted thereon.

### BRIEF DESCRIPTION OF THE DRAWINGS

Other characteristics, details and advantages of the invention may be inferred from the description of the invention hereunder. A more complete appreciation of the invention and many of the attendant advantages thereof will be readily obtained as the same becomes better understood by reference to the following detailed description when considered in connection with the accompanying figures, wherein:
FIG. 1 illustrates an isometric view of a fluid management system in accordance with an embodiment of the present invention.
FIG. 2 illustrates flip side of the fluid management system of FIG. 1.
FIG. 3 shows an exploded view of the fluid management system of FIG. 1.
FIG. 4 shows an enlarged view of leakage indicator in the fluid management system.
FIG. 5 shows an enlarged front view of the leakage indicator of FIG. 4.
FIG. 6 depicts a cross-sectional view of the channel.

### DETAILED DESCRIPTION OF THE INVENTION

It must be noted that the accompanying figures disclose the invention in a detailed enough way to be implemented, said figures helping to better define the invention if needs be. The invention should however not be limited to the embodiment disclosed in the description.

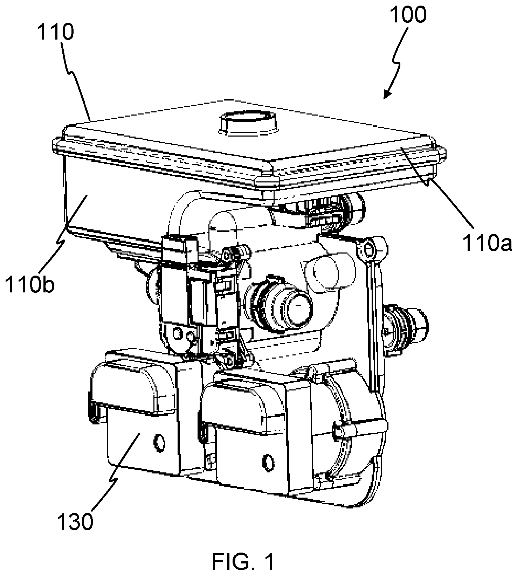

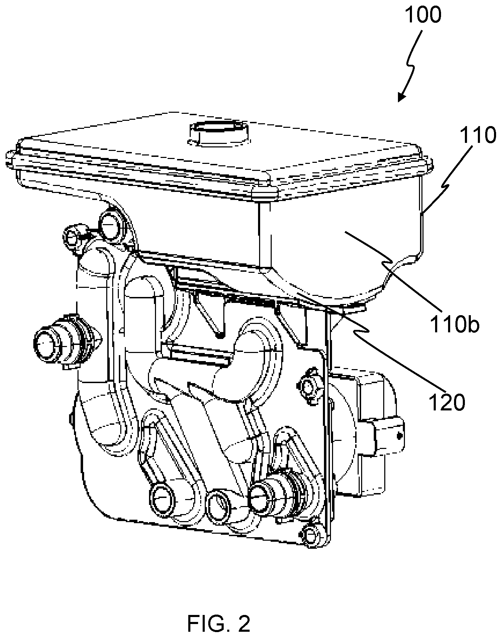

FIG. 1 and FIG. 2 of the accompanying drawings illustrates isometric views of a fluid management system 100 in accordance with an embodiment of the present invention. The fluid management system 100 comprises a tank 110 adapted to store a pressurized fluid and to degas the fluid by removing gas, particularly air, present in the fluid. The tank 110 includes a lid 110a adapted to close the tank. Further, the fluid management system 100 includes a support 120 adapted to support the tank thereon. The tank 110 is removably mounted on the support 120 by means of at least one mounting element, wherein the said mounting element can be a screw or a bolt. The tank 110 can be mounted on the support 120 by means of snap engagement elements. However, the present invention is not limited to any mounting means for mounting the tank 110 on the support as far as the mounting means configure secure connection between the tank 110 and the support 120. In addition, the support 120 is adapted to support at least one fluidic function component, more particularly at least one pump 130 and/or at least one valve mounted thereon.

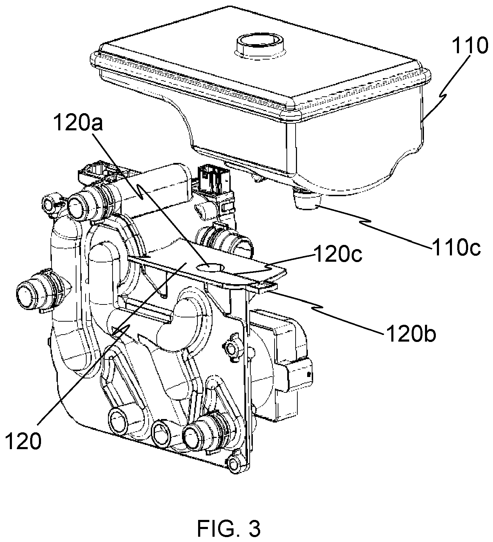

FIG. 3 shows an exploded view of the fluid management system 100. The tank 110 includes an interior volume 110b of variable depth and a spigot 110c in fluid communication with the interior volume 110b of the tank 110 and is disposed on the bottom of the tank where the depth being maximum. The spigot 110c has a substantially hollow cylindrical shape and made integral with the tank 110. The support 120 includes an opening 120a corresponding to the spigot 110c disposed on the surface of the support 120. Wherein the spigot 110c and the corresponding opening 120a are adapted to configure connection and fluid communication between an interior volume 110b of the tank 110 and a conduit external to the tank 110, wherein the conduit is a part of fluid flow passages configuring fluid communication between the tank 110 and different fluidic function components of the fluid management systems. In addition a leakage indicator in the form of a reservoir 120b is disposed outside the tank 110 and in fluid communication with the opening 120a through at least one channel 120c emanating from the opening 120a, wherein the channel 120c is configured on the support 120. The reservoir 120b is disposed outside the tank 110 to be visible from outside the tank 110.

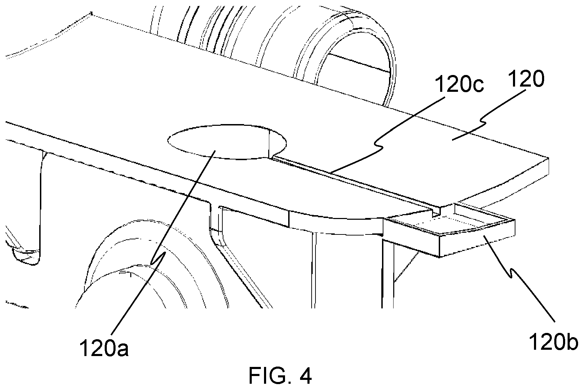

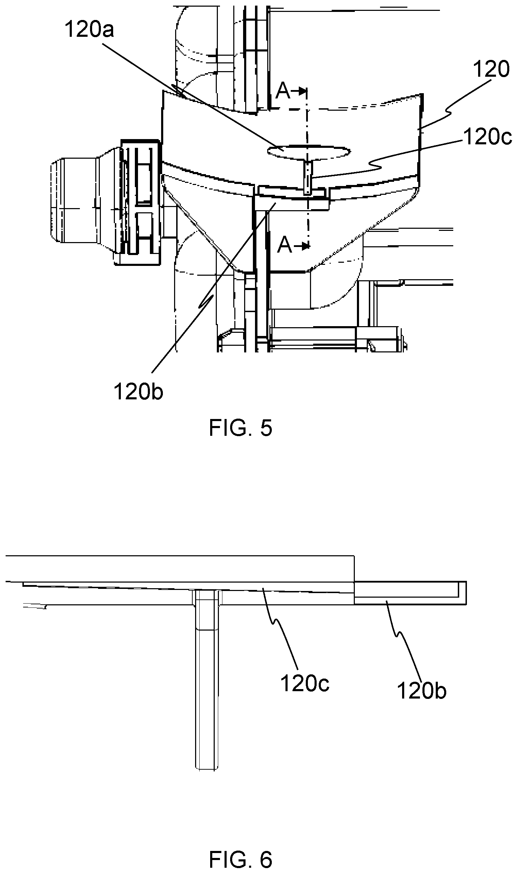

FIG. 4 and FIG. 5 shows and enlarged view of the reservoir 120b and channel 120c. In accordance with an embodiment of the present invention the reservoir 120b can be detachably coupled to the support. The support 120 is substantially concave with concavity directed towards the tank 110. The channel 120c is formed at the bottom most portion or at the apex of the concavity of the support so that all the leaking fluid is collected in the channel 120c. The bottom of the tank 110 is essentially convex with a convexity complementary to the concavity of the support 120. The bottom of the tank 110 is abutting the support 120 and at least partially covers the channel 120c when the tank 110 is resting on the support 120. In accordance with an embodiment of the present invention the channel 120c follows substantially a straight profile which allows the fluid leaked from the tank 110 or any parts of the system to freely flow to the reservoir 120b without any hindrance. The channel is so configured to cause natural flow of the leaking fluid from the opening towards the reservoir.

FIG. 6 shows a cross-sectional view of the channel 120c in accordance with an embodiment of the present invention, the channel is either in the form of a depletion or incision. Further, the channel 120c sloped from the opening 120a side towards the reservoir 120b side thereof so that the leaked fluid can be easily egress to the reservoir 120b due to gravity.

## Claims

1. A fluid management system (100) comprises;
• a tank (110) adapted to store pressurized fluid;
• a support (120) adapted to support the tank (110) thereon;
wherein the tank (110) comprises a spigot (110c) and the support comprises corresponding opening (120a) adapted to configure connection and fluid communication between an interior volume (110b) of the tank (110) and a conduit external to the tank (110);
**characterized in that** a leakage indicator in form of a reservoir (120b) disposed outside the tank (110) and in fluid communication with the opening (120a) through at least one channel (120c) emanating from the opening (120a).

2. The fluid management system (100) of claim 1, wherein the tank (110) is a degassing tank.

3. The fluid management system (100) of claim 1, wherein the channel (120c) is configured on the support (120).

4. The fluid management system (100) of claim 1, wherein the channel (120c) follows substantially a straight profile.

5. The fluid management system (100) of claim 1, wherein the channel (120c) is either depletion or incision.

6. The fluid management system (100) according to any of the preceding claim, wherein the channel (120c) is sloped from the opening (120a) side towards the reservoir (120b) side thereof.

7. The fluid management system (100) according to claim 1, wherein the reservoir (120b) is integrally formed with the support (120).

8. The fluid management system (100) according to claim 1, wherein the reservoir (120b) is detachably coupled to the support (120).

9. The fluid management system (100) according to claim 1, wherein the support (120) is substantially concave with concavity towards the tank (110).

10. The fluid management system (100) according to the previous claim, wherein the bottom of the tank (110) is essentially convex with a convexity complementary to the concavity of the support (120).

11. The fluid management system (100) according to the previous claim, wherein bottom of the tank (110) abutting the support (120) at least partially covers the channel (120c).

12. The fluid management system (100) according to claim 1, wherein the support (120) is adapted to support at least one fluidic function component, more particularly at least one pump (130) and/ or at least one valve mounted thereon.
